# EUROPEAN PATENT APPLICATION

(11) **EP 4 783 264 A1**
(43) Date of publication of application: **29.07.2026**
(21) Application number: 24886196.5
(22) Date of filing: 29.10.2024
(51) Int. Cl.: H01M 4/525, H01M 4/505, H01M 4/36, H01M 4/131, H01M 10/052, H01M 4/02

(54) **POSITIVE ELECTRODE MATERIAL AND METHOD FOR MANUFACTURING SAME**

(30) Priority: 02.11.2023 KR 20230150225
(71) Applicant: LG Chem, Ltd., Seoul 07336 (KR)
(72) Inventor: HAN, Song Yi, Daejeon 34122 (KR); LEE, June Woo, Daejeon 34122 (KR); LEE, Kyung Lok, Daejeon 34122 (KR); HA, Seoung Chul, Daejeon 34122 (KR); SHIN, Hye Won, Daejeon 34122 (KR); KANG, Hyuk, Daejeon 34122 (KR); YOU, Min Kyu, Daejeon 34122 (KR)
(74) Representative: Hoffmann Eitle
(86) International application number: PCT/KR2024/016620
(87) International publication number: WO 2025/095522

(57) **Abstract**

A positive electrode material according to one embodiment of the present invention comprises a positive electrode active material having a surface B/Ni ratio appropriately controlled according to the average particle diameter of the positive electrode active material, thereby alleviating an increase in viscosity of a slurry manufactured by the subsequent process.

## Description

### Technical Field

### [CROSS-REFERENCE TO RELATED APPLICATION]

The present application claims priority to Korean Patent Application No. 2023-0150225, filed on November 2, 2023, the entire content of which is incorporated herein for all purposes by reference.

### [Technical Field]

The present invention relates to a positive electrode material and a method for manufacturing the same.

### Background Art

Recently, as technology for electric vehicles and the like has developed, demand for a high-capacity secondary battery has increased, and thus, research on a positive electrode using a high-nickel positive electrode active material having excellent capacity characteristics is being actively conducted.

The high-nickel positive electrode active material is attracting attention for the development of high energy density cells due to its high capacity expression, but has a problem in that, due to thermodynamic instability caused by increased Ni content, a change over time due to exposure to the atmosphere become severe, and when slurry is made with the high-nickel positive electrode material, the viscosity gradually increases and gelation occurs after a certain period of time.

To supplement this, a method of modifying the surface of the positive electrode active material by coating boron on the high-nickel positive electrode active material has been proposed. This can alleviate the change over time and the viscosity increase to some extent, but there was a problem in that the LI-B-O solid solution formed when the surface coating part was formed caused changes in the electrical conductivity, ionic conductivity, and thermal conductivity of the positive electrode active material.

### [Prior Art Literature]

### [Patent Documents]

(Patent Document 0001) JP 6862503 B2

### Disclosure

### Technical Problem

An object to be achieved by the present invention is to provide a positive electrode material in which gel formation is reduced by controlling an appropriate B/Ni ratio according to an average particle diameter of a positive electrode active material.

Another object to be achieved by the present invention is to provide a method for manufacturing a positive electrode material in which an increase in slurry viscosity is reduced by appropriately controlling a B/Ni ratio according to an average particle diameter of a positive electrode active material.

### Technical Solution

(1) The present invention provides a positive electrode material, comprising at least one of a first positive electrode active material and a second positive electrode active material, wherein each of the first positive electrode active material and the second positive electrode active material includes: a lithium transition metal composite oxide containing 60 mol% or more of nickel relative to the total transition metal; and a boron coating part formed on a surface of the lithium transition metal composite oxide, wherein the first positive electrode active material has a D₅₀ of 2 µm or more and 9 µm or less, and a molar ratio of boron to nickel existing in a region extending 10 nm toward the center from an outermost side of the first positive electrode active material of 3 or more and 8 or less, and wherein the second positive electrode active material has a D₅₀ of 10 µm or more and 200 µm or less, and a molar ratio of boron to nickel existing in a region extending 10 nm toward the center from an outermost side of the second positive electrode active material of 9 or more and 45 or less.
(2) The present invention provides the positive electrode material according to (1) above, wherein the lithium transition metal composite oxide has an average composition represented by Chemical Formula 1 below:

   [Chemical Formula 1] LiₓNiₐCO_{b}Mn_{c}M_{d}O₂

   wherein:
   M1 is at least one selected from Al, Zr, B, W, Mo, Cr, Nb, Mg, Hf, Ta, La, Ti, Sr, Ba, Ce, Sn, Y, Zn, F, P, and S, and 0.8≤x≤1.2, 0.6≤a<1, 0<b<0.2, 0<c<0.2, 0≤d<0.1, and a+b+c+d= 1.
(3) The present invention provides the positive electrode material according to (1) or (2) above, wherein the molar ratio of boron to nickel existing in the region from the outermost side of the first positive electrode active material to 10 nm in the center direction is 4 or more and 7 or less.
(4) The present invention provides the positive electrode material according to any one of (1) to (3) above, wherein the molar ratio of boron to nickel existing in the region from the outermost side of the second positive electrode active material to 10 nm in the center direction is 9 or more and 40 or less.
(5) The present invention provides the positive electrode material according to any one of (1) to (4) above, wherein the D₅₀ of the first positive electrode active material is 3 µm or more and 8 µm or less.
(6) The present invention provides the positive electrode material according to any one of (1) to (5) above, wherein the D₅₀ of the second positive electrode active material is 10 µm or more and 190 µm or less.
(7) The present invention provides the positive electrode material according to any one of (1) to (6) above, wherein the positive electrode material comprises both the first positive electrode active material and the second positive electrode active material.
(8) The present invention provides the positive electrode material according to any one of (1) to (7) above, wherein the second positive electrode active material is comprised in an amount of 40 parts by weight or more and 90 parts by weight or less relative to 100 parts by weight of the sum of the first positive electrode active material and the second positive electrode active material.
(9) The present invention provides the positive electrode material according to any one of (1) to (8) above, wherein the second positive electrode active material is comprised in an amount of 70 parts by weight or more and 80 parts by weight or less relative to 100 parts by weight of the sum of the first positive electrode active material and the second positive electrode active material.
(10) The present invention provides a positive electrode comprising the positive electrode material according to any one of (1) to (9) above.
(11) The present invention provides a lithium secondary battery comprising the positive electrode according to (10) above.

### Advantageous Effects

In the positive electrode material according to one embodiment of the present invention, gel formation is reduced by controlling an appropriate B/Ni ratio according to an average particle diameter of the positive electrode active material.

In the method for manufacturing a positive electrode material according to one embodiment of the present invention, an increase in slurry viscosity is reduced by appropriately controlling a B/Ni ratio according to an average particle diameter of the positive electrode active material.

### Best Modes of the Invention

The terms or words used in the specification and claims of the present application should not be construed as being limited to their ordinary or dictionary meanings, but should be interpreted as meanings and concepts consistent with the technical spirit of the present invention, based on the principle that the inventor may adequately define the concepts of terms to best describe his invention.

It should be understood that terms such as "comprise", "include", and "have" as used herein are intended to designate the presence of implemented features, numbers, steps, components, or combinations thereof, but not to preclude a possibility of existence or addition of one or more other features, numbers, steps, components, or combinations thereof.

In this specification, the average particle diameter (D₅₀) refers to a particle size based on 50% of the volume cumulative particle size distribution of the positive electrode active material precursor, positive electrode active material, or lithium transition metal oxide powder. The average particle diameter (D₅₀) can be measured using a laser diffraction method. For example, the positive electrode active material powder is dispersed in a dispersion medium, and then introduced into a commercially available laser diffraction particle size measurement device (e.g., Microtrac MT 3000) and irradiated with an ultrasonic wave of about 28 kHz with an output of 60 W. Thereafter, the average particle diameter can be determined by obtaining a volume cumulative particle size distribution graph, and then obtaining a particle size corresponding to 50% of the volume cumulative amount.

Hereinafter, the present invention will be described in detail.

### <Positive electrode material>

The present invention provides a positive electrode material.

The positive electrode material according to one embodiment of the present invention comprises at least one of a first positive electrode active material and a second positive electrode active material, wherein each of the first positive electrode active material and the second positive electrode active material includes: a lithium transition metal composite oxide containing 60 mol% or more of nickel relative to the total transition metal; and a boron coating part formed on a surface of the lithium transition metal composite oxide, wherein the first positive electrode active material has a D₅₀ of 2 µm or more and 9 µm or less, and a molar ratio of boron to nickel existing in a region from an outermost side of the first positive electrode active material to 10 nm in a center direction of 3 or more and 8 or less, and wherein the second positive electrode active material has a D₅₀ of 10 µm or more and 20 µm or less, and a molar ratio of boron to nickel existing in a region from an outermost side of the second positive electrode active material to 10 nm in a center direction of 9 or more and 45 or less.

The present inventors have found that the molar ratio of boron to nickel existing in a region from the outermost side of each positive electrode active material to 10 nm in a center direction, i.e., the B/Ni ratio on the surface, is appropriately controlled according to the average particle diameter of each positive electrode active material including a boron coating part, the content of the Li-B-O solid solution included in each positive electrode active material to be manufactured can be adjusted to an appropriate level, and an increase in the viscosity of the slurry can be alleviated to uniformly apply the slurry to the electrode, thereby reducing changes in electrical conductivity, ionic conductivity, and thermal conductivity resulting from the formation of the boron coating part, and as a result, have completed the present invention.

Hereinafter, the first positive electrode active material and the second positive electrode active material included in the positive electrode material will be described.

### 1. First Positive Electrode Active Material

The first positive electrode active material according to one embodiment of the present invention may be a positive electrode active material including: a lithium transition metal composite oxide containing 60 mol% or more of nickel relative to the total transition metal; and a boron coating part formed on the surface of the lithium transition metal composite oxide, wherein the average particle diameter of the first positive electrode active material is 2 µm or more and 9 µm or less, and the molar ratio of boron to nickel existing on the surface of the first positive electrode active material is 3 or more and 8 or less.

According to one embodiment of the present invention, the first positive electrode active material may be a small-diameter positive electrode active material having an average particle diameter of 2 µm or more and 9 µm or less, and as a specific example, the average particle diameter of the first positive electrode active material may be 2.2 µm or more, 2.4 µm or more, 2.6 µm or more, 2.8 µm or more, 3 µm or more, 3.2 µm or more, 3.4 µm or more, 3.6 µm or more, 3.8 µm or more, or 4 µm or more, and may also be 8.8 µm or less, 8.6 µm or less, 8.4 µm or less, 8.2 µm or less, 8 µm or less, 7.8 µm or less, 7.6 µm or less, 7.4 µm or less, 7.2 µm or less, or 7 µm or less.

According to one embodiment of the present invention, the boron coating part may be formed on the surface of the first positive electrode active material and thus include an ion-conductive lithium boron oxide (LBO) intermediate phase. A more detailed description of the Li-B-O solid solution included in the boron coating part will be described later.

According to one embodiment of the present invention, the boron coating part may be formed on the entire or a portion of the surface of the first positive electrode active material, and when the boron coating part is formed on the entire surface of the first positive electrode active material, it may be referred to as a boron coating layer.

According to one embodiment of the present invention, the boron coating part may occupy an area of 85% or more, for specific examples, 85.5% or more, 86% or more, 86.5% or more, 87% or more, or 87.5% or more, relative to the entire surface of the first positive electrode active material.

According to one embodiment of the present invention, the boron coating part may be a region of 5 nm or more and 100 nm or less in the center direction from the surface of the first positive electrode active material. The boron coating part may specifically be a region of 10 nm or more, 20 nm or more, 30 nm or more, 40 nm or more, or 50 nm or more, and also 100 nm or less, 90 nm or less, 80 nm or less, 70 nm or less, or 60 nm or less in the center direction from the surface of the first positive electrode active material.

According to one embodiment of the present invention, the molar ratio of boron to nickel present on the surface of the first positive electrode active material, i.e., the surface B/Ni value, may be 3 or more and 8 or less, and for specific examples, 3.1 or more, 3.2 or more, 3.3 or more, 3.4 or more, 3.5 or more, 3.6 or more, 3.7 or more, 3.8 or more, 3.9 or more, 4 or more, 4.1 or more, 4.2 or more, 4.3 or more, 4.4 or more, 4.5 or more, 4.6 or more, 4.7 or more, 4.8 or more, 4.9 or more, or 5 or more, and also 7.9 or less, 7.8 or less, 7.7 or less, 7.6 or less, 7.5 or less, 7.4 or less, 7.3 or less, 7.2 or less, 7.1 or less, 7 or less, 6.9 or less, 6.8 or less, 6.7 or less, 6.6 or less, 6.5 or less, 6.4 or less, 6.3 or less, 6.2 or less, 6.1 or less, or 6 or less. When the above range is satisfied, the first positive electrode active material manufactured through the subsequent process can include an appropriate amount of Li-B-O solid solution, thereby alleviating the increase in viscosity of the slurry including the first positive electrode active material and thus suppressing gel formation.

When the molar ratio of boron to nickel present on the surface of the first positive electrode active material exceeds the above range, the capacity and lifespan are reduced due to the excessive presence of the Li-B-O solid solution. When it is less than the above range, the Li-B-O solid solution is present at a level below an appropriate level, so that the surface energy of the first positive electrode active material increases, which may increase gel formation during slurry preparation, and the viscosity of the slurry including the first positive electrode active material manufactured through the subsequent process is greatly increased.

According to one embodiment of the present invention, the molar ratio of boron to nickel present on the surface of the first positive electrode active material can be obtained through Electron Spectroscopy for Chemical Analysis (ESCA) using a K-alpha XPS device from Thermo Fisher. In this case, the surface analyzed through the ESCA analysis may be a region from the outermost side of the first positive electrode active material to 10 nm in the center direction.

### 2. Second Positive Electrode Active Material

The second positive electrode active material according to one embodiment of the present invention may be a positive electrode active material including: a lithium transition metal composite oxide containing 60 mol% or more of nickel relative to the total transition metal; and a boron coating part formed on the surface of the lithium transition metal composite oxide, wherein the average particle diameter of the second positive electrode active material is 10 µm or more and 20 µm or less, and the molar ratio of boron to nickel existing on the surface of the second positive electrode active material is 9 or more.

According to one embodiment of the present invention, the second positive electrode active material may be a large-diameter positive electrode active material having an average particle diameter of 10 µm or more and 20 µm or less, and as a specific example, the average particle diameter of the second positive electrode active material may be 10.2 µm or more, 10.4 µm or more, 10.6 µm or more, 10.8 µm or more, 11 µm or more, 11.2 µm or more, 11.4 µm or more, 11.6 µm or more, 11.8 µm or more, or 12 µm or more, and also 19.5 µm or less, 19 µm or less, 18.5 µm or less, 18 µm or less, 17.5 µm or less, 17 µm or less, 16.5 µm or less, 16 µm or less, 15.5 µm or less, or 15 µm or less.

According to one embodiment of the present invention, the boron coating part may be formed on the surface of the large-diameter positive electrode active material and include an ion-conductive lithium boron oxide (LBO) intermediate phase. A more detailed description of the Li-B-O solid solution included in the boron coating part will be described later.

According to one embodiment of the present invention, the boron coating part may be formed on the entire or a portion of the surface of the second positive electrode active material, and when the boron coating part is formed on the entire surface of the second positive electrode active material, it may be referred to as a boron coating layer.

According to one embodiment of the present invention, the boron coating part may occupy an area of 85% or more, for specific examples, 85.5% or more, 86% or more, 86.5% or more, 87% or more, or 87.5% or more, relative to the entire surface of the first positive electrode active material.

According to one embodiment of the present invention, the boron coating layer may be a region of 5 nm or more and 100 nm or less in the center direction from the surface of the first positive electrode active material. The boron coating part may specifically be a region of 10 nm or more, 20 nm or more, 30 nm or more, 40 nm or more, or 50 nm or more, and also 100 nm or less, 90 nm or less, 80 nm or less, 70 nm or less, or 60 nm or less in the center direction from the surface of the second positive electrode active material.

According to one embodiment of the present invention, the molar ratio of boron to nickel present on the surface of the second positive electrode active material, i.e., the surface B/Ni value, may be 9 or more and 45 or less, and for specific examples, 9.1 or more, 9.2 or more, 9.3 or more, 9.4 or more, 9.5 or more, 9.6 or more, 9.7 or more, 9.8 or more, 9.9 or more, 10 or more, 10.1 or more, 10.2 or more, 10.3 or more, 10.4 or more, 10.5 or more, 10.6 or more, 10.7 or more, 10.8 or more, 10.9 or more, or 11 or more, and also 44.5 or less, 44 or less, 43.5 or less, 43 or less, 42.5 or less, 42 or less, 41.5 or less, 41 or less, 40.5 or less, 40 or less, 39.5 or less, 39 or less, 38.5 or less, 38 or less, 37.5 or less, or 37 or less. When the above range is satisfied, the second positive electrode active material manufactured through the subsequent process can include an appropriate amount of Li-B-O solid solution, thereby alleviating the increase in viscosity of the slurry including the second positive electrode active material and thus suppressing gel formation.

When the molar ratio of boron to nickel present on the surface of the second positive electrode active material exceeds the above range, the capacity and lifespan are reduced due to the excessive presence of the Li-B-O solid solution. When it is less than the above range, the Li-B-O solid solution is present at a level below an appropriate level, so that the surface energy of the second positive electrode active material increases, which may increase gel formation during slurry preparation, and the viscosity of the slurry including the second positive electrode active material manufactured through the subsequent process is greatly increased.

According to one embodiment of the present invention, the molar ratio of boron to nickel present on the surface of the second positive electrode active material can be obtained through Electron Spectroscopy for Chemical Analysis (ESCA) using a K-alpha XPS device from Thermo Fisher. In this case, the surface analyzed through the ESCA analysis may be a region from the outermost side of the second positive electrode active material to 10 nm.

Each of the first positive electrode active material and the second positive electrode active material according to one embodiment of the present invention may include a lithium transition metal composite oxide having an average composition represented by Chemical Formula 1 below:

[Chemical Formula 1] ] LiₓNiₐCo_{b}Mn_{c}M_{d}O₂

wherein:
M is at least one selected from Al, Zr, B, W, Mo, Cr, Nb, Mg, Hf, Ta, La, Ti, Sr, Ba, Ce, Sn, Y, Zn, F, P, and S, and
0.8≤x≤1.2, 0.6≤a<1, 0<b<0.2, 0<c<0.2, 0≤d<0.1, and a+b+c+d=1.

According to one embodiment of the present invention, the x represents a molar ratio of lithium in the lithium composite transition metal oxide, and may be 0.8 or more and 1.2 or less, and as specific examples, 0.84 or more, 0.88 or more, 0.92 or more, 0.96 or more, or 1.00 or more, and also 1.18 or less, 1.16 or less, 1.14 or less, 1.12 or less, 1.10 or less, 1.08 or less, 1.06 or less, or 1.04 or less.

According to one embodiment of the present invention, the a represents a molar ratio of nickel in the lithium composite transition metal oxide, and may be 0.6 or more and less than 1.0, and as specific examples, 0.62 or more, 0.64 or more, 0.66 or more, 0.68 or more, 0.7 or more, 0.72 or more, 0.74 or more, 0.76 or more, 0.78 or more, or 0.8 or more, and also 0.99 or less, 0.98 or less, 0.97 or less, 0.96 or less, 0.95 or less, 0.94 or less, 0.93 or less, 0.92 or less, 0.91 or less, 0.9 or less, or 0.89 or less. According to one embodiment of the present invention, when the molar ratio of nickel in the lithium composite transition metal oxide has the above-mentioned range, the capacity characteristics may be excellent.

According to one embodiment of the present invention, the b represents a molar ratio of cobalt in the lithium composite transition metal oxide, and may be more than 0 and less than 0.2, and for specific examples, 0.02 or more, 0.04 or more, 0.06 or more, 0.08 or more, or 0.1 or more, and also 0.19 or less, 0.18 or less, 0.17 or less, 0.16 or less, or 0.15 or less.

According to one embodiment of the present invention, the c represents a molar ratio of manganese in the lithium composite transition metal oxide, and may be more than 0 and less than 0.2, and for specific examples, 0.02 or more, 0.04 or more, 0.06 or more, 0.08 or more, or 0.1 or more, and also 0.19 or less, 0.18 or less, 0.17 or less, 0.16 or less, or 0.15 or less.

According to one embodiment of the present invention, the d represents a molar ratio of a doping element, i.e., M, in the lithium composite transition metal oxide, and may be 0 or more and less than 0.1, and for specific examples, 0.001 or more, 0.002 or more, 0.003 or more, 0.004 or more, or 0.005 or more, and also 0.09 or less, 0.08 or less, 0.07 or less, 0.06 or less, or 0.05 or less.

According to one embodiment of the present invention, the M may be Al, Zr, B, W, Mo, Cr, Nb, Mg, Hf, Ta, La, Ti, Sr, Ba, Ce, Sn, Y, Zn, F, P, S, or a combination thereof.

A positive electrode material according to another embodiment of the present invention may include both the first positive electrode active material and the second positive electrode active material.

According to another embodiment of the present invention, the second positive electrode active material may be included in an amount of 40 parts by weight or more and 90 parts by weight or less, and for specific examples, 45 parts by weight or more, 50 parts by weight or more, 55 parts by weight or more, 60 parts by weight or more, 65 parts by weight or more, or 70 parts by weight or more, and also 89 parts by weight or less, 88 parts by weight or less, 87 parts by weight or less, 86 parts by weight or less, 85 parts by weight or less, 84 parts by weight or less, 83 parts by weight or less, 82 parts by weight or less, 81 parts by weight or less, or 80 parts by weight or less, based on 100 parts by weight of the sum of the first positive electrode active material and the second positive electrode active material included in the positive electrode material. When the above range is satisfied, the energy density of the electrode to be manufactured can be improved.

### <Method for Manufacturing Positive Electrode Material>

The present invention provides a method for manufacturing a positive electrode material.

A method of manufacturing a positive electrode material according to one embodiment of the present invention is a method for manufacturing each of the first positive electrode active material and the second positive electrode active material, wherein each of the method for manufacturing the first positive electrode active material and the method for manufacturing the second positive electrode active material is characterized by including the steps of: (S1) mixing and calcining a positive electrode active material precursor including a transition metal hydroxide and a lithium-containing raw material to produce a calcined product including a lithium transition metal oxide; (S2) washing the calcined product to produce a washed product having a residual lithium amount of 0.3 to 0.9% by weight on the surface of the lithium transition metal oxide; and (S3) mixing the washed product and a boron-containing raw material and heat-treating the mixture at 200 to 400°C to form a coating layer including a Li-B-O solid solution on the surface of the lithium transition metal oxide, wherein the boron-containing raw material is used in an amount of 100 to 1500 ppm by weight based on the washed product.

Hereinafter, each step of the method for manufacturing a positive electrode material according to one embodiment of the present invention will be described.

### 1. Step (S1)

This is a step of mixing and calcining a positive electrode active material precursor including a transition metal hydroxide and a lithium-containing raw material to produce a calcined product including a lithium transition metal oxide.

The transition metal hydroxide may be used by purchasing a commercially available positive electrode active material precursor, or may be prepared according to a method for manufacturing a positive electrode active material precursor well known in the art. For example, the precursor may be manufactured by adding an ammonium cation-containing complex forming agent and a basic compound to a transition metal solution containing a nickel-containing raw material, a cobalt-containing raw material, and a manganese-containing raw material, and performing a co-precipitation reaction.

The positive electrode active material precursor may include a secondary particle formed by agglomeration of primary particles, and may be represented by Chemical Formula 2 below:

[Chemical Formula 2] Ni_{a'}Co_{b'}Mnc_{'}M_{a'}(OH)₂

wherein:
M is at least one selected from Al, Zr, B, W, Mo, Cr, Nb, Mg, Hf, Ta, La, Ti, Sr, Ba, Ce, Sn, Y, Zn, F, P, and S, and
0.5<a'<1, 0<b'<0.4, 0<c'<0.3, 0<d'<0.05, and a+b+c+d=1.

According to one embodiment of the present invention, the a' refers to an atomic fraction of nickel in the precursor, and may be 0.5<a'<1, preferably 0.6≤a'<1, 0.7≤a'<1, and more preferably 0.7≤a'≤0.97.

According to one embodiment of the present invention, the b' refers to an atomic fraction of cobalt in the precursor, and may be 0<b'<0.4, preferably 0.1≤a'<0.4, and more preferably 0.1≤a'≤0.35.

According to one embodiment of the present invention, the c' refers to an atomic fraction of cobalt in the precursor, and may be 0<c'<0.3, preferably 0<c'≤0.25, and more preferably 0.1≤a'≤0.25.

The d' refers to an atomic fraction of the doping element M in the precursor, and may be 0<d'<0.05, preferably 0.01≤a'<0.05, more preferably 0.01≤a'≤0.04.

According to one embodiment of the present invention, the method for manufacturing the first positive electrode active material and the method for manufacturing the second positive electrode active material may be different in the average particle diameter of the positive electrode active material precursor used, but other conditions may be the same.

According to one embodiment of the present invention, the average particle diameter of the positive electrode active material precursor used in the method for manufacturing the first positive electrode active material may be 2 µm or more and 7.5 µm or less, and for specific examples, 2.5 µm or more, 3 µm or more, 3.5 µm or more, 4 µm or more, or 4.5 µm or more, and also 7 µm or less, 6.5 µm or less, 6 µm or less, 5.5 µm or less, or 5 µm or less.

According to one embodiment of the present invention, the average particle diameter of the positive electrode active material precursor used in the method for manufacturing the second positive electrode active material may be 9 µm or more and 19 µm or less, and for specific examples, 10 µm or more, 11 µm or more, 12 µm or more, 12.5 µm or more, or 13 µm or more, and also 18 µm or less, 17 µm or less, 16 µm or less, 15 µm or less, or 14.5 µm or less.

According to one embodiment of the present invention, the lithium-containing raw material may include at least one selected from lithium hydroxide hydrate, lithium carbonate, and lithium hydroxide. The lithium-containing raw material may be specifically lithium hydroxide hydrate, more specifically LiOH·H₂O. In this case, the reactivity between the precursor having a high atomic fraction of nickel among the metal elements in the precursor and the lithium-containing raw material can be improved.

According to one embodiment of the present invention, the positive electrode active material precursor and the lithium-containing raw material may be mixed at a molar ratio of 1:1.0 to 1:1.10, specifically 1:1.03 to 1:1.08, and more specifically 1:1.05 to 1:1.07.

According to one embodiment of the present invention, when the positive electrode active material precursor and the lithium-containing raw material are mixed at the above molar ratio, the capacity of the positive electrode active material may not be reduced, the problem of unreacted Li remaining as a by-product may not occur, and the capacity decrease and the separation phenomenon of positive electrode active material particles after calcination may also be suppressed.

According to one embodiment of the present invention, the calcination in step 1) may be performed at 700°C to 950°C, and for specific examples, 750°C to 850°C, more specifically 750°C to 800°C, or 730°C to 760°C. When the calcination temperature is within the above range, the crystals may be formed in an appropriate size, and the process cost may not be high.

According to one embodiment of the present invention, the calcination in step 1) may be performed in an oxygen atmosphere. In this case, a calcined product having a structurally stable phase can be formed.

According to one embodiment of the present invention, the calcination in step 1) may be performed for 5 to 24 hours. The calcination may be performed specifically for 5 to 12 hours, and more specifically for 5 to 10 hours. When the calcination time is within the above range, the calcination may be performed well without deviation (uniformly) depending on the calcination position.

### 2. Step (S2)

According to one embodiment of the present invention, step (S2) is a step of washing the calcined product prepared in the above step (S1) to produce a washed product having a residual lithium amount of 0.3 to 0.9% by weight on the surface of the lithium transition metal oxide.

According to one embodiment of the present invention, the washing is a process for controlling the residual lithium on the surface of the lithium transition metal oxide prepared in the above step (S1), and through the washing, the residual lithium amount on the surface of the lithium transition metal oxide can be controlled to 0.3 to 0.9% by weight, specifically 0.3 to 0.8% by weight, or 0.3 to 0.7% by weight. By being manufactured through the washed product with a controlled residual lithium amount as described above, the first positive electrode active material and the second positive electrode active material of the present invention can finally manufacture a positive electrode active material including a Li-B-O solid solution.

Specifically, the residual lithium is used as a reactant for manufacturing the coating layer including the Li-B-O solid solution. When the residual lithium is less than 0.4% by weight, the residual lithium content on the surface capable of producing the Li-B-O solid solution is insufficient, so that lithium inside the lithium transition metal oxide core participates in the reaction for forming the Li-B-O solid solution. In this case, the collapse of the layer structure composed of the core and the coating layer is accelerated, which may cause a problem of increasing the resistance increase rate when used in a lithium secondary battery. In addition, when the residual lithium exceeds 0.9% by weight, residual lithium that has not reacted with boron exists even after the formation of the Li-B-O solid solution, which may lower the diffusivity of lithium, resulting in a decrease in capacity and an increase in resistance when used in a lithium secondary battery.

According to one embodiment of the present invention, the residual lithium may be at least one selected from the group consisting of LiOH and Li₂CO₃, but is not limited thereto.

According to one embodiment of the present invention, the washing may be performed by adding 30 to 150 parts by weight of a washing solution based on 100 parts by weight of the calcined product, and specifically, may be performed by adding 30 to 85 parts by weight, or 30 to 80 parts by weight, based on 100 parts by weight of the calcined product. As a result of the washing, the washed product may be manufactured.

According to one embodiment of the present invention, as the amount of the washing solution added based on 100 parts by weight of the calcined product increases, the residual lithium on the surface of the lithium transition metal oxide decreases, thereby reducing the molar ratio of boron to nickel present on the surface of the first positive electrode active material and the second positive electrode active material. In this way, by adjusting the content of the washing solution, the residual lithium on the surface of the lithium transition metal oxide can be controlled as intended in the present invention, the calcined product cannot be gelled, and the lithium in the calcined product can be prevented from being excessively dissolved.

According to one embodiment of the present invention, the amount of residual lithium remaining in each of the calcined product and the washed product can be calculated by stirring 5 g of the calcined product in 100 ml of distilled water for 5 minutes using an 888titrando device from Metrohm, filtering, collecting only the reaction liquid, and titrating it with an HCl aqueous solution having a concentration of 0.1M.

According to one embodiment of the present invention, the washing may be performed at 10 to 80°C, and specifically, at 15 to 65°C, or at 20 to 30°C.

According to one embodiment of the present invention, the washing may be performed for 1 minute to 120 minutes, and specifically, for 3 minutes to 60 minutes, or for 5 minutes to 30 minutes.

According to one embodiment of the present invention, the solvent of the washing solution may be at least one selected from deionized water, distilled water, and ethanol. Specifically, the solvent of the washing solution may be deionized water and/or distilled water, but is not limited thereto.

According to one embodiment of the present invention, after the washing process and before the step (S3), a drying process may be further performed. The drying is for removing moisture from the lithium transition metal oxide containing moisture after the washing process, and may be performed at 60°C to 150°C after the moisture is removed using a vacuum pump. Specifically, the drying may be performed under a temperature condition of 60°C to 150°C for 12 hours or more.

### 3. Step (S3)

According to one embodiment of the present invention, the step (S3) is a step of mixing the washed product prepared in the step (S2) and a boron-containing raw material and heat-treating the mixture at 200°C to 350°C to form a coating layer including a Li-B-O solid solution on the surface of the lithium transition metal oxide.

According to one embodiment of the present invention, the residual lithium remaining on the surface of the lithium transition metal oxide after the step (S2) reacts with the boron-containing raw material to form a coating layer containing a Li-B-O solid solution, thereby improving the life characteristics of the battery when the first positive electrode active material and/or the second positive electrode active material is applied to the battery.

According to one embodiment of the present invention, the boron-containing raw material may be at least one selected from H₃BO₃, B₂O₃, B₂H₄O₄, LiBO₂, Li₂B₄O₇, and AlBO₃. The boron-containing raw material may be specifically H₃BO₃ or B₂O₃, and more specifically H₃BO₃. In this case, since the melting point of the boron-containing raw material is low, a uniform coating layer can be formed.

According to one embodiment of the present invention, the boron-containing raw material may be added in an amount of 100 to 1500 ppm by weight, and for specific examples, 110 to 1400 ppm, 120 to 1300 ppm, or 130 to 1200 ppm, based on the washed product. When the content of the boron-containing raw material is within the above range, the capacity of the battery can be improved, and the resulting coating part can suppress direct reaction between the electrolyte and the lithium transition metal oxide, thereby improving the long-term performance characteristics of the battery.

According to one embodiment of the present invention, the residual lithium on the surface of the lithium transition metal oxide having the content adjusted in step (S2) may react with the boron-containing raw material through heat treatment in step (S3) and participate as a reactant in the formation of the Li-B-O solid solution.

However, when the Li-B-O solid solution exceeds an appropriate level, the electrochemical characteristics are seriously deteriorated during electrode manufacturing, and when it is below the appropriate level, the surface energy of the positive electrode active material increases, which has a problem of adversely affecting the stability of the slurry.

Accordingly, according to the present invention, in the step of forming the boron coating part, the boron-containing material is added in a weight range of 100 ppm to 1500 ppm relative to the dried lithium transition metal oxide, and the content of the washing solution and the range of the heat treatment temperature are appropriately adjusted, so that the molar ratio of boron to nickel present on the surface of the positive electrode active material, i.e., the surface B/Ni value, can be appropriately adjusted according to the average particle diameter of the positive electrode active material, thereby adjusting the content of the Li-B-O solid solution included in each positive electrode active material to an appropriate level.

According to one embodiment of the present invention, the surface B/Ni values of the first positive electrode active material and the second positive electrode active material can be adjusted according to the amount of the boron-containing raw material added. In other words, the amount of boron-containing raw material added and the surface B/Ni values of the first positive electrode active material and the second positive electrode active material may have a proportional correlation.

According to one embodiment of the present invention, when manufacturing the first positive electrode active material, the boron-containing raw material may be added in an amount of 100 ppm by weight or more and 800 ppm by weight or less based on the washed product, and for specific examples, 150 ppm by weight or more, 200 ppm by weight or more, 250 ppm by weight or more, 300 ppm by weight or more, 350 ppm by weight or more, 400 ppm by weight or more, or 450 ppm by weight or more, and also 790 ppm by weight or less, 780 ppm by weight or less, 770 ppm by weight or less, 760 ppm by weight or less, 750 ppm by weight or less, 740 ppm by weight or less, or 730 ppm by weight or less. When the above range is satisfied, the surface B/Ni value of the first positive electrode active material can be adjusted to 3 or more and 8 or less.

According to one embodiment of the present invention, when manufacturing the second positive electrode active material, the boron-containing raw material may be added in an amount of 450 ppm by weight or more and 1500 ppm by weight or less based on the washed product, and for specific examples, 500 ppm by weight or more, 520 ppm by weight or more, 540 ppm by weight or more, 560 ppm by weight or more, 580 ppm by weight or more, 600 ppm by weight or more, or 620 ppm by weight or more, and also 1500 ppm by weight or less, 1400 ppm by weight or less, 1300 ppm by weight or less, 1200 ppm by weight or less, 1100 ppm by weight or less, 1000 ppm by weight or less, or 9000 ppm by weight or less. When the above range is satisfied, the surface B/Ni value of the second positive electrode active material can be adjusted to 9 or more.

According to one embodiment of the present invention, the heat treatment temperature can be adjusted to control the residual lithium on the surface of the lithium transition metal oxide as intended in the present invention. For example, as the heat treatment temperature increases, the boron-containing raw material on the surface of the lithium transition metal oxide can diffuse to the center of the lithium transition metal oxide, thereby lowering the surface B/Ni.

According to one embodiment of the present invention, the heat treatment temperature may be in a range of 200°C or more and 305°C or less, and for specific examples, 205°C or more, 210°C or more, 215°C or more, 220°C or more, 225°C or more, 230°C or more, and also 304°C or less, 303°C or less, 302°C or less, 301°C or less, 300°C or less, or 299°C or less.

According to one embodiment of the present invention, the heat-treatment may be performed under an oxygen atmosphere, a nitrogen atmosphere, and an atmospheric atmosphere. Specifically, the heat-treatment may be performed under an atmospheric atmosphere.

According to one embodiment of the present invention, the heat-treatment may be performed for 5 to 24 hours. If the heat-treatment time is within the above range, an appropriate coating layer may be formed and production efficiency may be improved.

### <Positive Electrode>

According to one embodiment of the present invention, a positive electrode including the positive electrode material is provided.

Specifically, the positive electrode includes a positive electrode current collector and a positive electrode active material layer formed on the positive electrode current collector and including the positive electrode material.

According to one embodiment of the present invention, the positive electrode current collector is not particularly limited as long as it has conductivity without causing a chemical change in the battery, and may be, for example, stainless steel, aluminum, nickel, titanium, calcined carbon, or aluminum or stainless steel having a surface treated with carbon, nickel, titanium, silver, etc. Additionally, the positive electrode current collector may typically have a thickness of 3 to 500 µm, and may have fine irregularities formed on the surface of the current collector to increase the adhesion of the positive electrode active material. For example, it may be used in various forms such as a film, a sheet, a foil, a net, a porous body, a foam, a non-woven fabric, or the like.

According to one embodiment of the present invention, the positive electrode active material layer, along with the positive electrode material described above, may include a conductive material and a binder.

According to one embodiment of the present invention, the conductive material is used to impart conductivity to the electrode, and may be any material without particular limitation as long as it has electroconductivity without causing a chemical change in a battery to be configured. Specific examples thereof may include graphite such as natural graphite or artificial graphite; a carbon-based material such as carbon black, acetylene black, Ketjen black, channel black, furnace black, lamp black, thermal black, and carbon fiber; a powder or fiber of metal such as copper, nickel, aluminum, silver, etc.; a conductive whisker such as a zinc oxide whisker and a potassium titanate whisker; a conductive metal oxide such as a titanium oxide; or a conductive polymer such as a polyphenylene derivative, and any one or a mixture of two or more thereof may be used. The conductive material may be typically included in an amount of 1 to 30% by weight based on the total weight of the positive electrode active material layer.

According to one embodiment of the present invention, the binder serves to improve the bonding between the positive electrode active material particles and the adhesion between the positive electrode material and the current collector. Specific examples thereof may include polyvinylidene fluoride (PVDF), vinylidene fluoride-hexafluoropropylene copolymer (PVDF-co-HFP), polyvinyl alcohol, polyacrylonitrile, carboxymethylcellulose (CMC), starch, hydroxypropylcellulose, regenerated cellulose, polyvinylpyrrolidone, tetrafluoroethylene, polyethylene, polypropylene, ethylene-propylene-diene polymer (EPDM), sulfonated-EPDM, styrene-butadiene rubber (SBR), fluorine rubber, or various copolymers thereof, and any one or a mixture of two or more thereof may be used. The binder may be included in an amount of 1 to 30% by weight based on the total weight of the positive electrode active material layer.

According to one embodiment of the present invention, the positive electrode may be manufactured according to a conventional positive electrode manufacturing method except for the use of the positive electrode material described above. Specifically, it may be manufactured by applying a composition for forming a positive electrode active material layer onto a positive electrode current collector, and then drying and rolling, wherein the composition is prepared by mixing or dispersing the above-mentioned positive electrode material and optionally, a binder and a conductive material in a solvent. The types and contents of the positive electrode material, binder, and conductive material are as described above.

According to one embodiment of the present invention, the solvent may be any solvent commonly used in the art, for example, dimethyl sulfoxide (DMSO), isopropyl alcohol, N-methyl pyrrolidone (NMP), acetone, water, or the like, and any one or a mixture of two or more thereof may be used. The solvent may be used in an amount sufficient to dissolve or disperse the positive electrode material, conductive material, and binder in consideration of the application thickness of the slurry and the manufacturing yield, and to allow the slurry to have a viscosity capable of exhibiting excellent thickness uniformity when applied for the subsequent positive electrode production.

Alternatively, the positive electrode may be manufactured by casting the composition for forming the positive electrode active material layer on a separate support, peeling a film from the support, and then laminating the film on a positive electrode current collector.

### <Lithium Secondary Battery>

According to one embodiment of the present invention, an electrochemical device including the positive electrode is provided. The electrochemical device may be specifically a battery, a capacitor, etc., and more specifically, a lithium secondary battery.

According to one embodiment of the present invention, specifically, the lithium secondary battery includes a positive electrode, a negative electrode positioned opposite the positive electrode, and a separator and electrolyte interposed between the positive electrode and the negative electrode, wherein the positive electrode is as described above. In addition, the lithium secondary battery may optionally further include a battery container for accommodating an electrode assembly formed of the positive electrode, negative electrode, and separator, and a sealing member for sealing the battery container.

According to one embodiment of the present invention, in the lithium secondary battery, the negative electrode includes a negative electrode current collector and a negative electrode active material layer positioned on the negative electrode current collector.

According to one embodiment of the present invention, the negative electrode current collector is not particularly limited as long as it has a high conductivity without causing a chemical change in a battery, and may be, for example, copper, stainless steel, aluminum, nickel, titanium, calcined carbon, copper or stainless steel that is surface-treated with carbon, nickel, titanium, silver, or the like, an aluminum-cadmium alloy, or the like. Additionally, the negative electrode current collector may typically have a thickness of 3 to 500 µm, and like the positive electrode current collector, may have fine irregularities formed on the surface of the current collector to increase the adhesion of the negative electrode active material. For example, it may be used in various forms such as a film, a sheet, a foil, a net, a porous body, a foam, a non-woven fabric, or the like.

According to one embodiment of the present invention, the negative electrode active material layer includes a binder and a conductive material along with the negative electrode active material.

According to one embodiment of the present invention, as the negative electrode active material, a compound capable of reversible intercalation and de-intercalation of lithium may be used. Specific examples thereof may include a carbonaceous material such as artificial graphite, natural graphite, graphitized carbon fiber, and amorphous carbon; a metallic compound alloyable with lithium, such as Si, Al, Sn, Pb, Zn, Bi, In, Mg, Ga, Cd, an Si alloy, an Sn alloy, or an Al alloy; a metal oxide capable of doping and dedoping lithium, such as SiOₓ(0 < x < 2), SnO₂, vanadium oxide, and lithium vanadium oxide; or a composite including the metallic compound and the carbonaceous material, such as an Si-C composite or an Sn-C composite, and any one or a mixture of two or more thereof may be used. Also, a metal lithium thin film may also be used as the negative electrode active material. Additionally, as the carbon material, low crystalline carbon, high crystalline carbon, or the like may all be used. Representative examples of the low crystalline carbon may include soft carbon and hard carbon, and representative examples of the high crystalline carbon may include amorphous, plate-shaped, flaky, spherical, or fibrous natural graphite or artificial graphite, Kish graphite, pyrolytic carbon, mesophase pitch-based carbon fiber, meso-carbon microbeads, mesophase pitches, and high-temperature calcined carbon such as petroleum or coal tar pitch derived cokes.

In addition, the binder and the conductive material may be the same as described in the positive electrode above.

According to one embodiment of the present invention, for example, the negative electrode active material layer may be manufactured by applying a negative electrode-forming composition, which is prepared by dispersing a negative electrode active material, and optionally a binder and a conductive material in a solvent, onto a negative electrode current collector and drying the same. Alternatively, it may also be manufactured by casting the negative electrode-forming composition on a separate support, peeling a film from the support, and then laminating the film on a negative electrode current collector.

Meanwhile, in the lithium secondary battery, the separator is to separate the negative electrode and the positive electrode, and to provide a passage for lithium ions to move. Any separator may be used without particular limitation as long as it is generally used as a separator in a lithium secondary battery. Particularly, a separator having excellent moisture-retention ability for an electrolyte while having low resistance to the migration of electrolyte ions is preferable. Specifically, a porous polymer film, for example, a porous polymer film made of polyolefin-based polymers such as ethylene homopolymer, propylene homopolymer, ethylene/butene copolymer, ethylene/hexene copolymer, and ethylene/methacrylate copolymer, or a laminated structure having two or more layers thereof may be used. In addition, a conventional porous nonwoven fabric, for example, a nonwoven fabric made of high melting point glass fiber, polyethylene terephthalate fiber, or the like may also be used. Further, in order to secure heat resistance or mechanical strength, a coated separator containing a ceramic component or a polymer material may also be used, and may optionally be used in a single-layer or multi-layer structure.

In addition, the electrolyte used in the present invention may be an organic liquid electrolyte, an inorganic liquid electrolyte, a solid polymer electrolyte, a gel-type polymer electrolyte, a solid inorganic electrolyte, a molten inorganic electrolyte, or the like which may be used in the preparation of a lithium secondary battery, but is not limited thereto.

Specifically, the electrolyte may include an organic solvent and a lithium salt.

According to one embodiment of the present invention, as the organic solvent, any solvent may be used without particular limitation as long as it can serve as a medium through which ions involved in the electrochemical reaction of the battery can move. Specifically, the organic solvent may be an ester-based solvent such as methyl acetate, ethyl acetate, γ-butyrolactone, or ε-caprolactone; an ether-based solvent such as dibutyl ether or tetrahydrofuran; a ketone-based solvent such as cyclohexanone; an aromatic hydrocarbon-based solvent such as benzene or fluorobenzene; a carbonate-based solvent such as dimethyl carbonate (DMC), diethyl carbonate (DEC), ethyl methyl carbonate (EMC), ethylene carbonate (EC), or propylene carbonate (PC); an alcohol-based solvent such as ethyl alcohol or isopropyl alcohol; nitriles such as R-CN (R is a straight, branched or cyclic C2-C20 hydrocarbon group, and may include a double-bond aromatic ring or ether bond); amides such as dimethylformamide; dioxolanes such as 1,3-dioxolane; or sulfolanes. Among them, the carbonate-based solvent is preferable, and a mixture of a cyclic carbonate (e.g., ethylene carbonate, propylene carbonate, etc.) having high ionic conductivity and high-dielectric constant capable of increasing charge/discharge performance of the battery and a low-viscosity linear carbonate-based compound (e.g., ethyl methyl carbonate, dimethyl carbonate, diethyl carbonate, etc.) is more preferable. In this case, excellent electrolyte performance can be obtained by mixing the cyclic carbonate and the chain carbonate in a volume ratio of about 1:1 to about 1:9.

According to one embodiment of the present invention, the lithium salt may be any compound without particular limitation as long as it can provide lithium ions used in a lithium secondary battery. Specifically, the lithium salt may be LiPF₆, LiClO₄, LiAsF₆, LiBF₄, LiSbF₆, LiA10₄, LiAlCl₄, LiCF₃SO₃, LiC₄F₉SO₃, LiN(C₂F₅SO₃)₂, LiN(C₂F₅SO₂)₂, LiN(CF₃SO₂)₂, LiCl, LiI, LiB(C₂O₄)₂, or the like. The lithium salt is preferably used at a concentration ranging from 0.1 to 2.0 M. When the concentration of the lithium salt is within the above range, the electrolyte has an appropriate conductivity and viscosity, whereby excellent electrolyte performance can be exhibited, and lithium ions can effectively move.

According to one embodiment of the present invention, in order to improve the lifespan characteristics of the battery, suppress a reduction in battery capacity and improve discharge capacity of the battery, the electrolyte may further include, in addition to the above electrolyte components, one or more additives, for example, a halo-alkylene carbonate-based compound such as difluoroethylene carbonate, pyridine, triethylphosphite, triethanolamine, cyclic ether, ethylene diamine, n-glyme, hexaphosphoric triamide, a nitrobenzene derivative, sulfur, a quinone imine dye, N-substituted oxazolidinones, N,N-substituted imidazolidine, ethylene glycol dialkyl ether, an ammonium salt, pyrrole, 2-methoxy ethanol, or aluminum trichloride. In this case, the additives may be included in an amount of 0.1% to 5% by weight based on the total weight of the electrolyte.

According to one embodiment of the present invention, as described above, since the lithium secondary battery including the positive electrode active material according to the present invention stably exhibits excellent discharge capacity, output characteristics, and capacity retention rate, it is useful in the field of portable devices such as mobile phones, laptop computers, digital cameras, and electric vehicles such as hybrid electric vehicle (HEV).

Hereinafter, examples of the present invention will be described in detail so that those skilled in the art can easily implement the present invention. However, the present invention may be embodied in a variety of forms and is not limited to the examples described herein.

### Preparation Example 1 - Preparation of Large-particle-diameter Positive Electrode Active Material (B)

Transition metal hydroxide having an average particle diameter of 12.5 µm and a composition of Ni_{0.97}Co_{0.01}Mn_{0.02}(OH)₂ and LiOH were mixed in a ratio of 1:1.04, and then aluminum hydroxide (Al(OH)₃) was additionally mixed in an amount of 3 mol% based on the transition metal hydroxide so that the composition of the positive electrode active material was finally LiNi_{0.94}Co_{0.01}Mn_{0.02}Al_{0.03}O₂, and the mixture was calcined at a temperature of 730°C for 12 hours under an oxidizing atmosphere to prepare a calcined product. The amount of residual lithium remaining in the calcined product was 1.1% by weight.

100 g of the calcined product was mixed with 40 g of distilled water and stirred for 5 minutes to prepare a washed product (composition: LiNi_{0.94}Co_{0.01}Mn_{0.02}Al_{0.03}O₂) having 0.7% by weight of residual lithium. The prepared washed product and 600 ppm by weight of H₃BO₃ as a boron-containing raw material based on the washed product were mixed and heat-treated at a temperature of 295°C for 5 hours to produce a positive electrode active material having an average particle diameter of 13 µm and a coating layer including a Li-B-O solid solution formed on the surface.

Meanwhile, the amount of residual lithium remaining in each of the calcined product and the washed product was calculated by stirring 5 g of the calcined product or washed product in 100 ml of distilled water for 5 minutes using an 888titrando device from Metrohm, filtering, collecting only the reaction liquid, and titrating it with an HCl aqueous solution having a concentration of 0.1M.

### Preparation Example 2 - Preparation of Large-particle-diameter Positive Electrode Active Material (C)

A positive electrode active material having an average particle diameter of 13 µm and a coating layer including a Li-B-O solid solution formed on the surface was produced in the same manner as in Preparation Example 1, except that the washed product prepared according to Preparation Example 1 was mixed with 900 ppm by weight of H₃BO₃ as a boron-containing raw material based on the washed product.

### Preparation Example 3 - Preparation of Large-particle-diameter Positive Electrode Active Material (F)

A positive electrode active material having an average particle diameter of 13 µm and a coating layer including a Li-B-O solid solution formed on the surface was produced in the same manner as in Preparation Example 1, except that the washed product prepared according to Preparation Example 1 and 700 ppm by weight of H₃BO₃ as a boron-containing raw material based on the washed product were mixed and heat-treated at a temperature of 275°C for 5 hours.

### Preparation Example 4 - Preparation of Large-particle-diameter Positive Electrode Active Material (G)

A positive electrode active material having an average particle diameter of 13 µm and a coating layer including a Li-B-O solid solution formed on the surface was produced in the same manner as in Preparation Example 1, except that the washed product prepared according to Preparation Example 1 was mixed with 700 ppm by weight of H₃BO₃ as a boron-containing raw material based on the washed product.

### Preparation Example 5 - Preparation of Small-particle-diameter Positive Electrode Active Material (a)

Transition metal hydroxide having an average particle diameter of 3.5 µm and a composition of Ni_{0.95}Co_{0.02}Mn_{0.03}(OH)₂ and LiOH were mixed in a ratio of 1:1.04, and then aluminum hydroxide (Al(OH)₃) was additionally mixed in an amount of 2 mol% based on the transition metal hydroxide so that the composition of the positive electrode active material was finally LiNi_{0.93}Co_{0.02}Mn_{0.03}Al_{0.02}O₂, and the mixture was calcined at a temperature of 730°C for 12 hours under an oxidizing atmosphere to prepare a calcined product. The amount of residual lithium remaining in the calcined product was 1.1% by weight.

100 g of the calcined product was mixed with 40 g of distilled water and stirred for 5 minutes to prepare a washed product (composition: LiNi_{0.93}Co_{0.02}Mn_{0.03}Al_{0.02}O₂) having 0.7% by weight of residual lithium. The prepared washed product and 700 ppm of H₃BO₃ as a boron-containing raw material were mixed and heat-treated at a temperature of 295°C for 5 hours to produce a positive electrode active material having an average particle diameter of 4 µm and a coating layer including a Li-B-O solid solution formed on the surface.

Meanwhile, the amount of residual lithium remaining in each of the calcined product and the washed product was calculated by stirring 5 g of the calcined product or washed product in 100 ml of distilled water for 5 minutes using an 888titrando device from Metrohm, filtering, collecting only the reaction liquid, and titrating it with an HCl aqueous solution having a concentration of 0.1M.

### Preparation Example 6 - Preparation of Small-particle-diameter Positive Electrode Active Material (b)

A positive electrode active material having an average particle diameter of 4 µm and a coating layer including a Li-B-O solid solution formed on the surface was produced in the same manner as in Preparation Example 5, except that the washed product prepared according to Preparation Example 5 and 700 ppm by weight of H₃BO₃ as a boron-containing raw material based on the washed product were mixed and heat-treated at a temperature of 275°C for 5 hours.

### Comparative Preparation Example 1 - Preparation of Large-particle-diameter Positive Electrode Active Material (A)

A positive electrode active material having an average particle diameter of 13 µm and a coating layer including a Li-B-O solid solution formed on the surface was produced in the same manner as in Preparation Example 1, except that the washed product prepared according to Preparation Example 1 was mixed with 300 ppm by weight of H₃BO₃ as a boron-containing raw material based on the washed product.

### Comparative Preparation Example 2 - Preparation of Large-particle-diameter Positive Electrode Active Material (D)

A positive electrode active material having an average particle diameter of 13 µm and a coating layer including a Li-B-O solid solution formed on the surface was produced in the same manner as in Preparation Example 1, except that 100 g of the calcined product prepared according to Preparation Example 1 was mixed with 45 g of distilled water and stirred for 5 minutes to prepare a washed product (composition: LiNi_{0.94}Co_{0.01}Mn_{0.02}Al_{0.03}O₂) having 0.742% by weight of residual lithium.

Meanwhile, the amount of residual lithium remaining in the washed product was calculated by stirring 5 g of the washed product in 100 ml of distilled water for 5 minutes using an 888titrando device from Metrohm, filtering, collecting only the reaction liquid, and titrating it with an HCl aqueous solution having a concentration of 0.1M.

### Comparative Preparation Example 3 - Preparation of Large-particle-diameter Positive Electrode Active Material (E)

A positive electrode active material having an average particle diameter of 13 µm and a coating layer including a Li-B-O solid solution formed on the surface was produced in the same manner as in Preparation Example 1, except that 100 g of the calcined product prepared according to Preparation Example 1 was mixed with 60 g of distilled water and stirred for 5 minutes to prepare a washed product (composition: LiNi_{0.94}Co_{0.01}Mn_{0.02}Al_{0.03}O₂) having 0.532% by weight of residual lithium.

Meanwhile, the amount of residual lithium remaining in the washed product was calculated by stirring 5 g of the washed product in 100 ml of distilled water for 5 minutes using an 888titrando device from Metrohm, filtering, collecting only the reaction liquid, and titrating it with an HCl aqueous solution having a concentration of 0.1M.

### Comparative Preparation Example 4 - Preparation of Large-particle-diameter Positive Electrode Active Material (H)

A positive electrode active material having an average particle diameter of 13 µm and a coating layer including a Li-B-O solid solution formed on the surface was produced in the same manner as in Preparation Example 1, except that the washed product prepared according to Preparation Example 1 and 700 ppm by weight of H₃BO₃ as a boron-containing raw material based on the washed product were mixed and heat-treated at a temperature of 315°C for 5 hours.

### Comparative Preparation Example 5 - Preparation of Small-particle-diameter Positive Electrode Active Material (c)

A positive electrode active material having an average particle diameter of 4 µm and a coating layer including a Li-B-O solid solution formed on the surface was produced in the same manner as in Preparation Example 5, except that the washed product prepared according to Preparation Example 5 and 700 ppm by weight of H₃BO₃ as a boron-containing raw material based on the washed product were mixed and heat-treated at a temperature of 315°C for 5 hours.

### Comparative Preparation Example 6 - Preparation of Small-particle-diameter Positive Electrode Active Material (d)

A positive electrode active material having an average particle diameter of 4 µm and a coating layer including a Li-B-O solid solution formed on the surface was produced in the same manner as in Preparation Example 5, except that the washed product prepared according to Preparation Example 5 was mixed with 2000 ppm by weight of H₃BO₃ as a boron-containing raw material based on the washed product.

### Example 1

The large-particle-diameter positive electrode active material produced in Preparation Example 1 and the small-particle-diameter positive electrode active material produced in Preparation Example 5 were mixed in a ratio of 8:2 to manufacture 500 g of positive electrode material, and the positive electrode material, a conductive material (SuperC65), and a binder (KF1100) were mixed in a ratio of 95:2:3 to manufacture a mixture. Thereafter, N-methyl-2-pyrrolidine (NMP) was added to the mixture so that the total solid content of the positive electrode active material in the mixture became 72%, and was stirred at 1500 rpm for 20 minutes using a homogenizer to manufacture a slurry.

### Example 2

The large-particle-diameter positive electrode active material produced in Preparation Example 2 and the small-particle-diameter positive electrode active material produced in Preparation Example 5 were mixed in a ratio of 8:2 to manufacture 500 g of positive electrode material, and the positive electrode material, a conductive material (SuperC65), and a binder (KF1100) were mixed in a ratio of 95:2:3 to manufacture a mixture. Thereafter, N-methyl-2-pyrrolidine (NMP) was added to the mixture so that the total solid content of the positive electrode active material in the mixture became 72%, and was stirred at 1500 rpm for 20 minutes using a homogenizer to manufacture a slurry.

### Example 3

500 g of positive electrode material including the large-particle-diameter positive electrode active material produced in Preparation Example 3 was manufactured, and the positive electrode material, a conductive material (SuperC65), and a binder (KF1100) were mixed in a ratio of 95:2:3 to manufacture a mixture. Thereafter, N-methyl-2-pyrrolidine (NMP) was added to the mixture so that the total solid content of the positive electrode active material in the mixture became 72%, and was stirred at 1500 rpm for 20 minutes using a homogenizer to manufacture a slurry.

### Example 4

500 g of positive electrode material including the large-particle-diameter positive electrode active material produced in Preparation Example 4 was manufactured, and the positive electrode material, a conductive material (SuperC65), and a binder (KF1100) were mixed in a ratio of 95:2:3 to manufacture a mixture. Thereafter, N-methyl-2-pyrrolidine (NMP) was added to the mixture so that the total solid content of the positive electrode active material in the mixture became 72%, and was stirred at 1500 rpm for 20 minutes using a homogenizer to manufacture a slurry.

### Example 5

500 g of positive electrode material including the small-particle-diameter positive electrode active material produced in Preparation Example 6 was manufactured, and the positive electrode material, a conductive material (SuperC65), and a binder (KF1100) were mixed in a ratio of 95:2:3 to manufacture a mixture. Thereafter, N-methyl-2-pyrrolidine (NMP) was added to the mixture so that the total solid content of the positive electrode active material in the mixture became 72%, and was stirred at 1500 rpm for 20 minutes using a homogenizer to manufacture a slurry.

### Example 6

500 g of positive electrode material including the small-particle-diameter positive electrode active material produced in Preparation Example 5 was manufactured, and the positive electrode material, a conductive material (SuperC65), and a binder (KF1100) were mixed in a ratio of 95:2:3 to manufacture a mixture. Thereafter, N-methyl-2-pyrrolidine (NMP) was added to the mixture so that the total solid content of the positive electrode active material in the mixture became 72%, and was stirred at 1500 rpm for 20 minutes using a homogenizer to manufacture a slurry.

### Comparative Example 1

The large-particle-diameter positive electrode active material produced in Comparative Preparation Example 1 and the small-particle-diameter positive electrode active material produced in Preparation Example 5 were mixed in a ratio of 8:2 to manufacture 500 g of positive electrode material, and the positive electrode material, a conductive material (SuperC65), and a binder (KF1100) were mixed in a ratio of 95:2:3 to manufacture a mixture. Thereafter, N-methyl-2-pyrrolidine (NMP) was added to the mixture so that the total solid content of the positive electrode active material in the mixture became 72%, and was stirred at 1500 rpm for 20 minutes using a homogenizer to manufacture a slurry.

### Comparative Example 2

The large-particle-diameter positive electrode active material produced in Comparative Preparation Example 2 and the small-particle-diameter positive electrode active material produced in Preparation Example 5 were mixed in a ratio of 8:2 to manufacture 500 g of positive electrode material, and the positive electrode material, a conductive material (SuperC65), and a binder (KF1100) were mixed in a ratio of 95:2:3 to manufacture a mixture. Thereafter, N-methyl-2-pyrrolidine (NMP) was added to the mixture so that the total solid content of the positive electrode active material in the mixture became 72%, and was stirred at 1500 rpm for 20 minutes using a homogenizer to manufacture a slurry.

### Comparative Example 3

The large-particle-diameter positive electrode active material produced in Comparative Preparation Example 3 and the small-particle-diameter positive electrode active material produced in Preparation Example 5 were mixed in a ratio of 8:2 to manufacture 500 g of positive electrode material, and the positive electrode material, a conductive material (SuperC65), and a binder (KF1100) were mixed in a ratio of 95:2:3 to manufacture a mixture. Thereafter, N-methyl-2-pyrrolidine (NMP) was added to the mixture so that the total solid content of the positive electrode active material in the mixture became 72%, and was stirred at 1500 rpm for 20 minutes using a homogenizer to manufacture a slurry.

### Comparative Example 4

500 g of positive electrode material including the large-particle-diameter positive electrode active material produced in Comparative Preparation Example 4 was manufactured, and the positive electrode material, a conductive material (SuperC65), and a binder (KF1100) were mixed in a ratio of 95:2:3 to manufacture a mixture. Thereafter, N-methyl-2-pyrrolidine (NMP) was added to the mixture so that the total solid content of the positive electrode active material in the mixture became 72%, and was stirred at 1500 rpm for 20 minutes using a homogenizer to manufacture a slurry.

### Comparative Example 5

500 g of positive electrode material including the small-particle-diameter positive electrode active material produced in Comparative Preparation Example 5 was manufactured, and the positive electrode material, a conductive material (SuperC65), and a binder (KF1100) were mixed in a ratio of 95:2:3 to manufacture a mixture. Thereafter, N-methyl-2-pyrrolidine (NMP) was added to the mixture so that the total solid content of the positive electrode active material in the mixture became 72%, and was stirred at 1500 rpm for 20 minutes using a homogenizer to manufacture a slurry.

### Comparative Example 6

500 g of positive electrode material including the small-particle-diameter positive electrode active material produced in Comparative Preparation Example 6 was manufactured, and the positive electrode material, a conductive material (SuperC65), and a binder (KF1100) were mixed in a ratio of 95:2:3 to manufacture a mixture. Thereafter, N-methyl-2-pyrrolidine (NMP) was added to the mixture so that the total solid content of the positive electrode active material in the mixture became 72%, and was stirred at 1500 rpm for 20 minutes using a homogenizer to manufacture a slurry.

### Experimental Example 1 - Measurement of B/Ni Value

The molar ratio of boron to nickel present on the surface of each positive electrode active material produced in the above preparation example/comparative preparation example was measured through Electron Spectroscopy for Chemical Analysis (ESCA) using a K-alpha XPS device from Thermo Fisher, and was listed in Tables 1 to 3 below. Here, the surface analyzed through the ESCA analysis is a region from the outermost side of the positive electrode active material to 10 nm.

### Experimental Example 2 - Measurement of Slurry Viscosity

For the positive electrode slurry prepared in the above example/comparative example, the viscosity was measured at 25°C, SC4-25, 26z, and 16 rpm using a Brookfield viscometer. Since 30,000 cp was the measurement limit under these measurement conditions, it was set as the measurement stop point.

**[Table 1]**

| | | Example | | Comparative example | | |
|---|---|---|---|---|---|---|
| | | 1 | 2 | 1 | 2 | 3 |
| Large-diameter positive electrode active material | Average particle diameter (µm) | 13 | 13 | 13 | 13 | 13 |
| | Surface B/Ni | 13.7 | 36.8 | 7.2 | 6.9 | 0.9 |
| Small-diameter positive electrode active material | Average particle diameter (µm) | 4 | 4 | 4 | 4 | 4 |
| | Surface B/Ni | 5.1 | 5.1 | 5.1 | 5.1 | 5.1 |
| Ratio of large-diameter positive electrode active material | | 80% | 80% | 80% | 80% | 80% |
| Slurry viscosity (10⁴cP) | | 1.08 | 0.86 | 1.47 | 1.65 | 3.00 |

**[Table 2]**

| | | Example | | Comparative example |
|---|---|---|---|---|
| | | 3 | 4 | 4 |
| Large-diameter positive electrode active material | Average particle diameter (µm) | 13 | 13 | 13 |
| | Surface B/Ni | 13.0 | 10.1 | 5.2 |
| Slurry viscosity (10⁴cP) | | 0.5 | 1.12 | 1.7 |

**[Table 3]**

| | | Example | | Comparative example | |
|---|---|---|---|---|---|
| | | 5 | 6 | 5 | 6 |
| Small-diameter positive electrode active material | Average particle diameter (µm) | 4 | 4 | 4 | 4 |
| | Surface B/Ni | 5.3 | 5.1 | 1.9 | 9.1 |
| Slurry viscosity (10⁴cP) | | 1.35 | 1.49 | 3.00 | 3.00 |

Referring to Table 1 above, it could be confirmed that in Examples 1 and 2 in which positive electrode materials including positive electrode active materials having different average particle diameters were manufactured and the surface B/Ni was appropriately adjusted according to the average particle diameter of the positive electrode active material, the slurry viscosity was significantly reduced compared to Comparative Examples 1 to 3.

Referring to Table 2 above, it could be confirmed that in Examples 3 and 4 in which the surface B/Ni of the large-diameter positive electrode active material having an average particle diameter of 10 µm or more was adjusted to 9 or more, the slurry viscosity was significantly reduced compared to Comparative Example 4 in which the surface B/Ni of the large-diameter positive electrode active material having an average particle diameter of 10 µm or more was less than 9.

Referring to Table 3 above, it could be confirmed that in Examples 5 and 6 in which the surface B/Ni of the small-diameter positive electrode active material having an average particle diameter of 2 µm or more and 9 µm or less was adjusted to 3 or more and 8 or less, the slurry viscosity was significantly reduced compared to Comparative Examples 5 and 6.

## Claims

1. A positive electrode material comprising at least one of a first positive electrode active material and a second positive electrode active material,
wherein each of the first positive electrode active material and the second positive electrode active material includes:
a lithium transition metal composite oxide containing 60 mol% or more of nickel relative to the total transition metal; and
a boron coating part formed on a surface of the lithium transition metal composite oxide,
wherein the first positive electrode active material has a D₅₀ of 2 µm or more and 9 µm or less, and a molar ratio of boron to nickel existing in a region extending 10 nm toward the center from an outermost side of the first positive electrode active material of 3 or more and 8 or less, and
wherein the second positive electrode active material has a D₅₀ of 10 µm or more and 20 µm or less, and a molar ratio of boron to nickel existing in a region extending 10 nm toward the center from an outermost side of the second positive electrode active material of 9 or more and 45 or less.

2. The positive electrode material according to claim 1, wherein the lithium transition metal composite oxide has an average composition represented by Chemical Formula 1 below:
[Chemical Formula 1] LiₓNiₐCo_{b}Mn_{c}M_{d}O₂
wherein:
M1 is at least one selected from Al, Zr, B, W, Mo, Cr, Nb, Mg, Hf, Ta, La, Ti, Sr, Ba, Ce, Sn, Y, Zn, F, P, and S, and 0.8≤x≤1.2, 0.6≤a<1, 0<b<0.2, 0<c<0.2, 0≤d<0.1, and a+b+c+d=1.

3. The positive electrode material according to claim 1, wherein the molar ratio of boron to nickel existing in the region extending 10 nm toward the center from the outermost side of the first positive electrode active material is 4 or more and 7 or less.

4. The positive electrode material according to claim 1, wherein the molar ratio of boron to nickel existing in the region extending 10 nm toward the center from the outermost side of the second positive electrode active material is 9 or more and 40 or less.

5. The positive electrode material according to claim 1, wherein the D₅₀ of the first positive electrode active material is 3 µm or more and 8 µm or less.

6. The positive electrode material according to claim 1, wherein the D₅₀ of the second positive electrode active material is 10 µm or more and 19 µm or less.

7. The positive electrode material according to claim 1, which comprises both the first positive electrode active material and the second positive electrode active material.

8. The positive electrode material according to claim 7, wherein the second positive electrode active material is comprised in an amount of 40 parts by weight or more and 90 parts by weight or less relative to 100 parts by weight of the sum of the first positive electrode active material and the second positive electrode active material.

9. The positive electrode material according to claim 7, wherein the second positive electrode active material is comprised in an amount of 70 parts by weight or more and 80 parts by weight or less relative to 100 parts by weight of the sum of the first positive electrode active material and the second positive electrode active material.

10. A positive electrode comprising the positive electrode material according to any one of claims 1 to 9.

11. A lithium secondary battery comprising the positive electrode according to claim 10.
